# EUROPEAN PATENT APPLICATION

(11) **EP 4 552 477 A1**
(43) Date of publication of application: **14.05.2025**
(21) Application number: 24211321.5
(22) Date of filing: 07.11.2024
(51) Int. Cl.: A01F 15/07

(54) **BALER AND METHOD FOR FORMING BALES**

(30) Priority: 10.11.2023 IT 202300023865
(71) Applicant: Kverneland Group Ravenna S.r.l., 48026 Russi (RA) (IT)
(72) Inventor: VECCHI, Maurizio, 40037 SASSO MARCONI BO (IT); CALDIRONI, Nicola, 48123 RAVENNA (IT)
(74) Representative: Conti, Marco

(57) **Abstract**

A baler (1) for forming bales of crops, includes: a compression chamber (2); a pick-up unit (3); a binding device for providing a binding film for wrapping the bale; a width reducing device. The width reducing device (4) includes a pair of rollers (401), supported by a first arm (402A) and a second arm (402B) and movable between an approached position, where the rollers are in contact with edges of the binding film so that a width of the film is narrowed, and a spaced apart position, where the rollers are distanced from the edges of the binding film. The width reducing device includes a hydraulic actuator (403) for moving the first and the second arm so as to move the pair of rollers between said approached and spaced apart positions.

## Description

This invention relates to a baler and to a method for forming bales.

Balers, or baling presses, are machines which pick up from the ground and compress previously cut crops such as rice straw, grass, wheat straw, maize straw and the like (hereinafter called "hay"), form bales from the hay and dump them onto the field. The presses may be hitched to the back of a machine, such as a tractor, driven by an operator, and then towed by the tractor (or other towing vehicle). Typically, baling presses have a pick-up unit, comprising a pick-up roller at the front of it to pick up the hay from the ground, a compression chamber for forming the bale and a rotary apparatus for feeding the hay picked up from the ground to the compression chamber of the baling press.

The compression chamber may be a fixed-diameter or a variable-diameter compression chamber. In particular, a baler with a fixed-diameter compression chamber includes a plurality of rollers that delimit the compression chamber. The plurality of rollers rotate about a rotation axis, thereby imparting rotational movements to the hay fed into the compression chamber.

Once formed inside the compression chamber, the bales are bound with a binding material. The bale can be bound with different kinds of material: for example, netting or film. In addition, the bale bound with the binding material may also be wrapped in a film. In this case, the film is applied after the bale has been bound. Wrapping the bale may be carried out in the baling press (inside the compression chamber) or after the bale has been released by the baling press. There are also solutions where the bale, after being formed in the compression chamber, is wrapped directly in the film without first being bound with the binding material. Normally, the film is a plastic film. In such a case, therefore, the plastic film is applied directly on the formed bale, inside the compression chamber. In particular, in these cases, the baler comprises a binding (wrapping) device and the bale is wrapped after being formed and when it is still inside the compression chamber. In particular, in these solutions, the binding material (that is, the film) is fed out by a binding device mounted inside the baler and is wrapped round the formed bale. In particular, the binding material is fed into the compression chamber and between the rotating rollers and the bale, and is moved around a circumference of the bale by the rolling movements of the bale and of the plurality of rotating rollers. One of the difficulties that may be encountered in this field is that if the bale is bound (and wrapped) in a film, problems may arise in moving the film when it needs to be applied to the bale and/or when the film is cut after being wrapped round the bale.

In this context, it is known that joining (gathering) the sides of the film at the beginning of the wrapping process in such a way that the width of the film is reduced allows the film to be applied more easily than when the film is stretched out for its full width. Moreover, gathering the sides of the film after wrapping it round the bale makes it easier to cut than a film that is stretched out for its full width.

In this field, therefore, there are several apparatuses and methods in which two gathering elements (for reducing the width of the film) come into contact with the edge of the film. These elements are moved mutually towards and away from each other so as to bring together the sides of the film. In this context, patent document US20200323143A1 provides a gathering apparatus to selectively join the sides of a film to be wrapped round a bale and comprises a pair of gathering elements acting in conjunction with a respective edge of the film and being motor driven. In that document, the drive system includes a motor and a reduction gear. The gathering elements are moved in a lateral direction between an out-of-operation position and an operating position, to gather the film as needed. Other prior art examples of gathering apparatuses to join the sides of a film are described in patent documents EP1170984B1, US20040055268A1, EP3278658B1, EP3729950A1, EP1872648B1, EP2022318B1, WO2021219534A1, DE102019210962A1 and EP2506701 B1.

However, the prior art devices and methods have some disadvantages and can be improved. Indeed, in this field, there is a need to provide a baler equipped with a device for joining (reducing the width of) the film used to wrap the bale, a device which is more efficient and stable, more robust and reduced in complexity and cost.

The aim of this disclosure is to provide a baler and a method for forming bales to overcome the above mentioned disadvantages of the prior art. This aim is fully achieved by the baler and method of this disclosure as characterized in the appended claims.

According to an aspect of it, this disclosure provides a baler. The baler is configured to form bales of crops (agricultural products). The bales are preferably round. The bales may also have other shapes. The baler includes a compression chamber. The compression chamber may be a fixed or variable diameter compression chamber. The compression chamber is configured to impart a rotational movement to the crops so as to form the bale.

The baler comprises a pick-up unit. The pick-up unit is configured for picking up crops from the ground and for feeding them into the compression chamber. The baler includes a binding device. The binding device includes a film reel. The film reel provides a binding film for wrapping the bale.

The binding device includes a film injection unit configured for drawing the binding film from the film reel and for injecting the binding film into the compression chamber so that the bale is wrapped by the binding film as a result of a rotational movement of the bale.

The baler comprises a width reducing device. The width reducing device is located downstream of the film injection unit. The width reducing device comprises a pair of rollers. The rollers of the pair of rollers are movable between an approached position, where the rollers are in contact with edges of the binding film so that a width of the film is narrowed, and a spaced apart position, where the rollers are distanced from the edges of the binding film.

The width reducing device includes a first arm and a second arm. The first and second arms each support a respective roller of the pair of rollers. The width reducing device includes a hydraulic actuator. The hydraulic actuator includes a first hydraulic cylinder, connected to the first arm. The hydraulic actuator includes a second hydraulic cylinder, connected to the second arm. The hydraulic actuator is configured to move the first and the second arm so as to move the pair of rollers between said approached and spaced apart positions.

This solution allows obtaining a width reducing device (for joining the sides of the film) which is particularly robust and efficient, where the hydraulic actuator is capable of moving and holding the arms (which support the rollers) in such a way that the rollers come into contact with the edges of the film to gather them, and of holding the rollers at the approached position so that they are not separated by the force of the film. Moreover, this solution is simple and reliable.

In an example, the baler includes a tailgate. The tailgate is movable between a closed position where the compression chamber is closed to form the bale, and an open position where the tailgate is open in order to release the bale formed inside the compression chamber. The baler includes a hydraulic tailgate actuator to move the tailgate between said open and closed positions. The baler includes a hydraulic circuit. The hydraulic circuit is hydraulically connected to the hydraulic tailgate actuator and to the first and second hydraulic cylinders to provide them with actuating oil. In this solution, therefore, the hydraulic circuit which the baler is already provided with to actuate the tailgate is also used to actuate the hydraulic actuator of the first and second arms, hence to move the rollers between the approached and spaced apart positions. This solution is particularly efficient and simple.

It should be noted that the Applicant has also developed an alternative embodiment which does not fall within the object claimed herein. Such an embodiment may also comprise a hydraulic circuit that is used exclusively for the pair of rollers and is not connected to the hydraulic circuit of the baler connected to the hydraulic tailgate actuator.

In an example, the hydraulic circuit includes a closing configuration in which the hydraulic circuit is configured to perform a closing movement, to move the tailgate from the open position to the closed position, and a spacing movement, to move the pair of rollers from the approached position to the spaced apart position.

In an example, the hydraulic circuit is configured to perform the closing movement and the spacing movement in time intervals that are at least in part overlapping.

Continued below is the description of the primary solution.

In an example, the hydraulic circuit comprises a dump line for connecting the first and the second hydraulic cylinders to a dump reservoir. The dump reservoir is provided in a tractor that tows the baler. The hydraulic circuit comprises an electro-valve. The electro-valve is inserted in the dump line. The electro-valve is movable between an active position, allowing the actuating oil to flow through the dump line towards the dump reservoir, and an inactive position, for preventing the actuating oil from reaching the dump reservoir.

The hydraulic circuit may also comprise- a control unit connected to the electro-valve for switching it to the active position to allow the rollers to move to the approached position.

In an example, the hydraulic circuit also comprises a fluid accumulator. The fluid accumulator is hydraulically connected to the first and the second hydraulic cylinders. The accumulator is full of gas. The gas in the accumulator is separated from the actuating oil of the hydraulic circuit through a separating element.

In an example, the hydraulic circuit includes a first part connected to the first and the second hydraulic cylinders. The hydraulic circuit includes a second part connected to the hydraulic tailgate actuator. The hydraulic circuit includes a hydraulic duct. The first part and the second part of the hydraulic circuit are connected through the hydraulic duct. The hydraulic circuit includes a unidirectional valve inserted in said hydraulic duct.

In an example, the rollers of the pair of rollers are of helical shape. In an example, one roller of the pair of rollers has the helical shape twisted in a first direction and the other roller of the pair of rollers has the helical shape twisted in a second direction. The second direction is the opposite of the first direction, so as to impart an upward movement to the film.

This solution allows working with the film in a particularly efficient manner and makes it possible to prevent unwanted movements of the film.

In an example, the rollers of the pair of rollers have grooved profiles.

According to an aspect of it, this disclosure provides a method for forming bales of crops. The method comprises a step of picking up crops from the ground through a pick-up unit of a baler. The method comprises a step of conveying the crops into a compression chamber of the baler.

The method comprises a step of imparting a rotational movement to the crops inside the compression chamber to form the bale. The method comprises a step of drawing a binding film from a film reel. The method comprises a step of injecting the binding film into the compression chamber so that the bale is wrapped by the binding film as a result of a rotational movement of the bale. The method comprises a step of moving a pair of rollers between an approached position, where the rollers are in contact with edges of the binding film so that a width of the film is narrowed, and a spaced apart position where the rollers are distanced from the edges of the binding film. The rollers are supported by a first arm and a second arm.

The method comprises a step, through a first hydraulic cylinder and a second hydraulic cylinder, of moving the first arm and the second arm, respectively, so as to move the pair of rollers between said approached and spaced apart positions.

In an example, the method comprises a step, through a hydraulic tailgate actuator, of moving a tailgate of the baler between a closed position where the compression chamber is closed to form the bale, and an open position where the tailgate is open in order to release the bale formed inside the compression chamber.

The method comprises a step of providing both the hydraulic tailgate actuator and the first and the second hydraulic cylinders with actuating oil through a hydraulic circuit.

In an example, the pair of rollers is moved to said spaced apart position responsive to a closure of the tailgate.

In an example, the method comprises a step of moving an electro-valve, inserted in a dump line which connects the first and the second hydraulic cylinders to a dump reservoir provided in a tractor that tows the baler, between an active position, to allow the actuating oil to flow through the dump line towards the dump reservoir, and an inactive position, for preventing the actuating oil from reaching the dump reservoir.

The method comprises a step of moving the electro-valve to the active position to move the rollers to the approached position.

In an example, a fluid accumulator is hydraulically connected to the first and the second hydraulic cylinders and the accumulator is filled with gas, separated from the actuating oil of the hydraulic circuit through a separating element.

In an example, the hydraulic circuit includes a first part connected to the first and the second hydraulic cylinders. The hydraulic circuit also includes a second part connected to the hydraulic tailgate actuator.

The hydraulic circuit comprises a hydraulic duct. The first part and the second part are connected through the hydraulic duct. The hydraulic circuit comprises a unidirectional valve inserted in said hydraulic duct.

In an example, when the rollers contact the binding film, at the approached position, they impart an upward movement to the film.

These and other features will become more apparent from the following description of a preferred embodiment, illustrated purely by way of nonlimiting example in the accompanying drawings, in which:

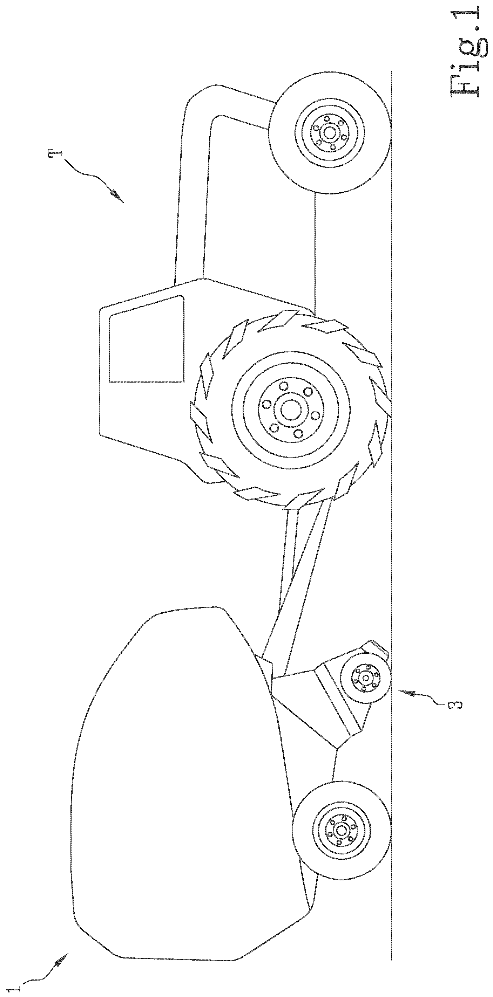

- Figure 1 shows a baler according to one or more aspects of this disclosure and a tractor which tows the baler;
- Figure 2 is a view of the compression chamber and of the pick-up unit of the baler;

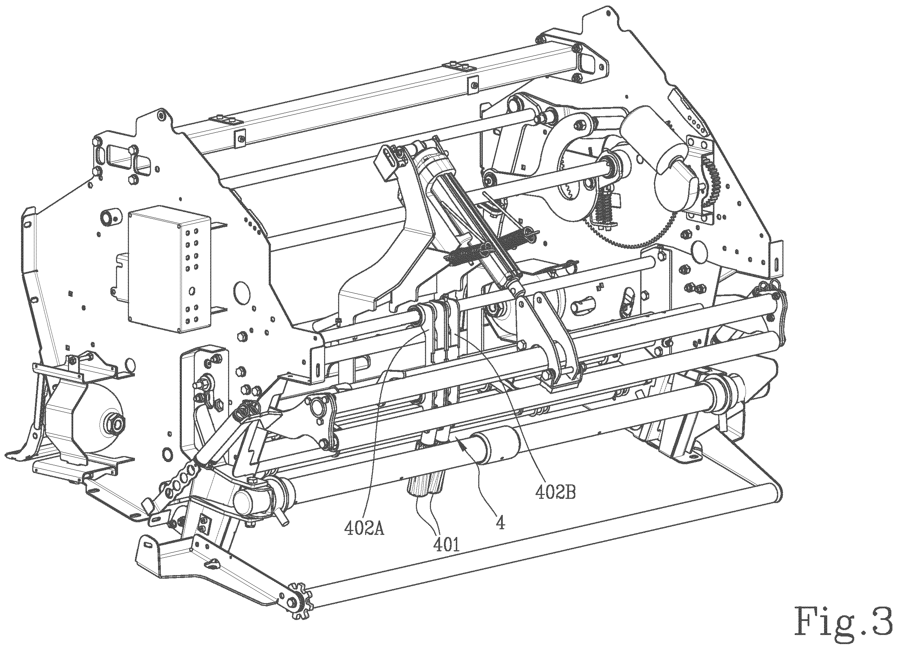

- Figure 3 shows the film width reducing device;

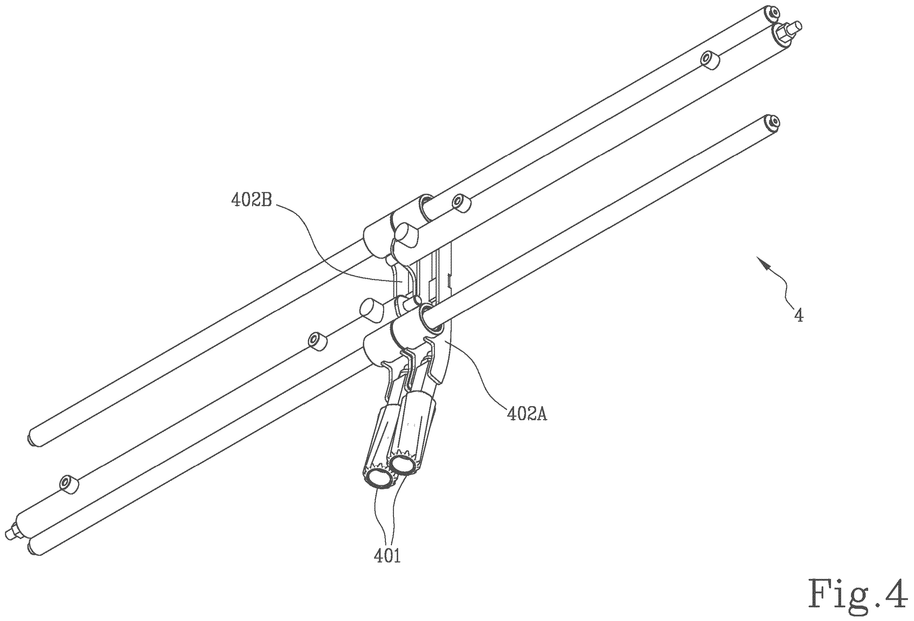

- Figure 4 shows the pair of roller at the approached position;

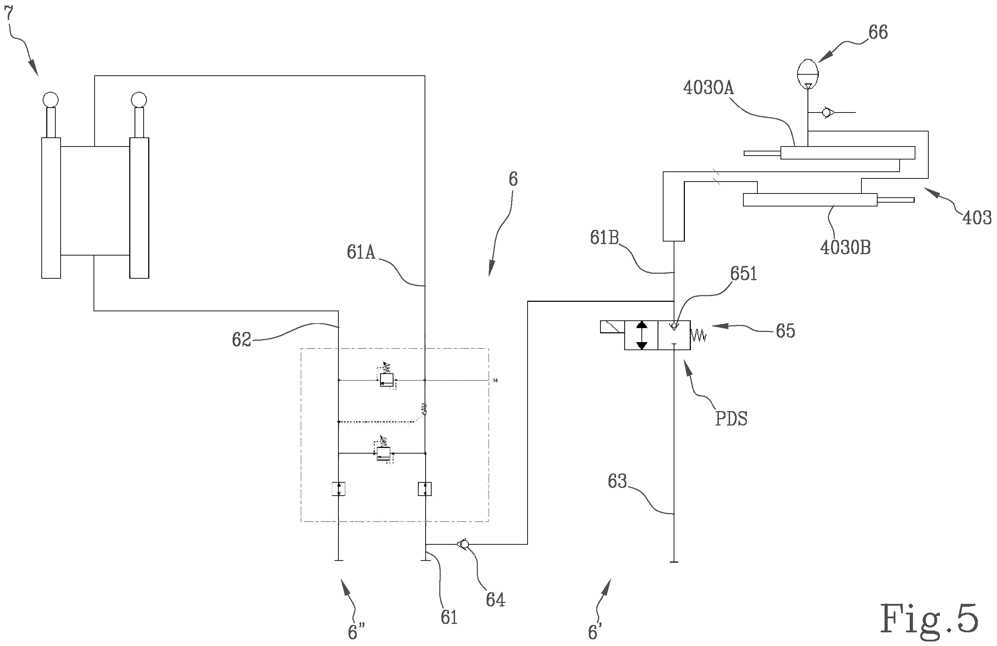

- Figure 5 shows a first embodiment of the hydraulic circuit;

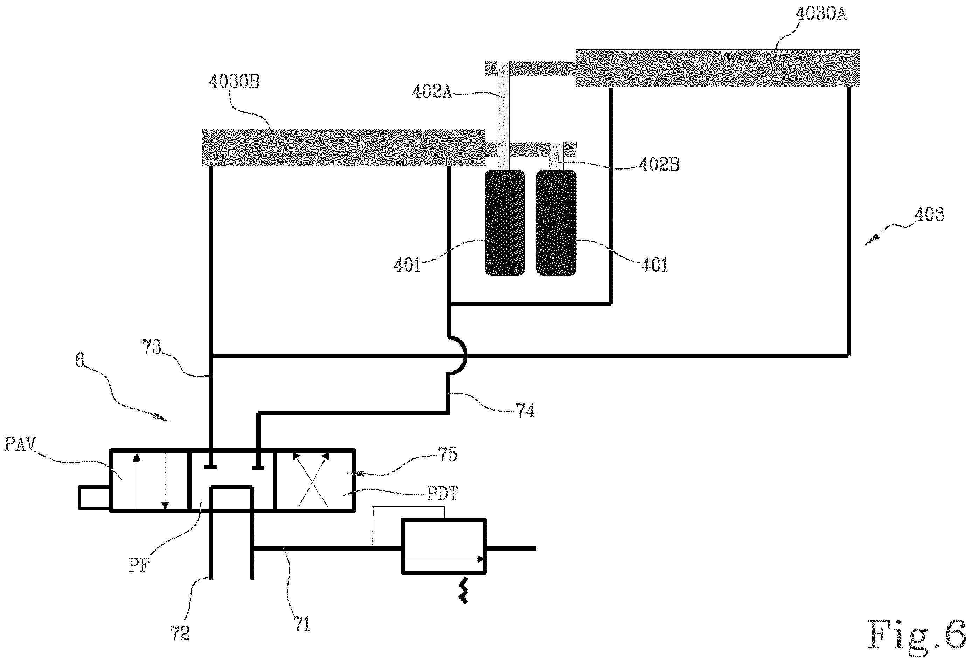

- Figure 6 shows a second embodiment of the hydraulic circuit.

With reference to the accompanying drawings, the numeral 1 denotes a baler (or baling press) for forming bales from crops. The baler 1 includes a compression chamber 2.

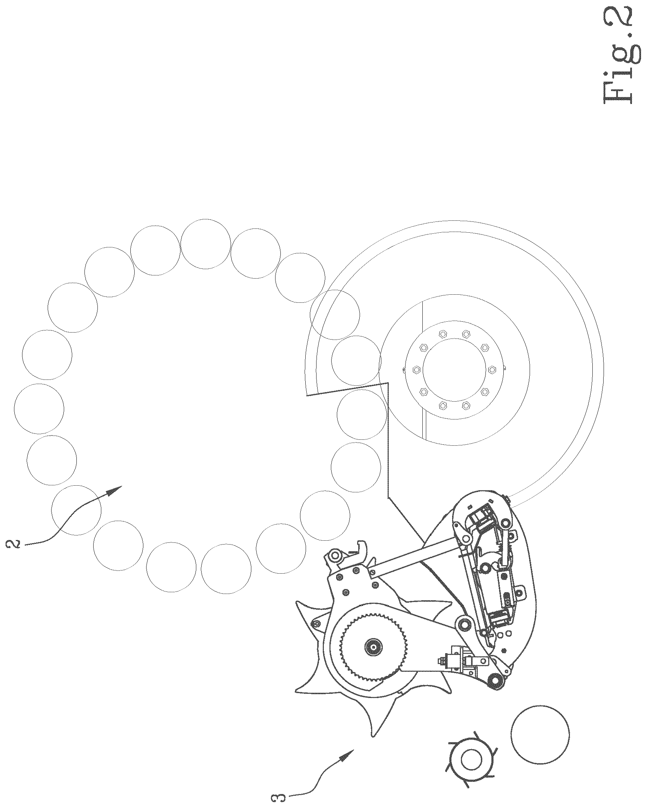

The baler 1 comprises a frame. The frame has an internal space. The baler 1 also includes a pick-up unit 3. The baler 1 includes a compression chamber 2. The pick-up unit 3 is configured to pick up hay (crop) from the ground and to feed it into the compression chamber 2. The pick-up unit has an inlet. The pick-up unit is provided with an outlet. The inlet faces the ground. The outlet of the pick-up unit is located inside the baler 1. The outlet faces the internal space. The compression chamber is configured to compress the hay to form the bale. The hay is fed to the compression chamber 2 through the outlet of the pick-up unit 3 in a feed direction. The baling press 1 comprises a plurality of guide rollers. The plurality of guide rollers is located inside the internal space of the baler (Figure 2). In this example, the compression chamber 2 has a fixed diameter. In this example, the rollers rotate and impart a rotational movement to the hay inside the compression chamber. Therefore, in this example, the guide rollers delimit the compression chamber. In another example embodiment (not illustrated), the compression chamber may have a variable diameter; in this example, therefore, the bale forming zone of the compression chamber increases in size as the bale progressively forms inside the chamber. In this example (variable chamber), the baling press also comprises a plurality of belts. The belts of the plurality of belts are juxtaposed with each other in the internal space. The belts of the plurality of belts are trained around the guide rollers (whose configuration is different from that of the guide rollers of the embodiment in which the compression chamber has a fixed diameter, hence different from the configuration illustrated in Figure 2) so as to define an endless loop. The loop is deformable to delimit the compression chamber. Furthermore, the rollers are rotatable to guide the belts around the loop. In particular, each part of the plurality of belts is stretched between two consecutive rollers. The plurality of belts thus surrounds the circumference of the bale forming inside the compression chamber. In particular, the belts are deformed as the bale progressively forms inside the compression chamber. Thus, the belts adapt to the shape of the bale formed inside the compression chamber.

Thus, a variable diameter compression chamber may be an alternative to the fixed diameter chamber (Figure 2).

The pick-up unit 3 comprises a pick-up roller. The pick-up roller picks up the hay from the ground. In an example, the pick-up roller is configured to rotate in a direction opposite of the direction of movement of the baling press so as to sweep the hay upwards. The pick-up roller has a plurality of tines which protrude from the pick-up roller to sweep the hay.

The pick-up unit may also comprise a pair of windshield arms. The pick-up unit may also comprise a rotary windshield cylinder (deflector roller) fixed between the windshield arms.

The pick-up unit also comprises a rotor. The rotor 2012 is located downstream of the pick-up roller. The rotor feeds the hay which has been picked up from the ground to the compression chamber of the baling press 1. The rotor includes feeding blades. The baling press 1 comprises a feeding channel. The feeding channel extends between an inlet and an outlet. The inlet faces towards the pick-up roller. The outlet defines an opening in the compression chamber.

The baling press 1 may comprise a plurality of knives to cut the crop picked up as it advances through the feeding channel. The baler 1 may be towed by a tractor T. The tractor has a power takeoff (PTO) to transfer power (drive power) to the baling press.

The baler includes a binding device. The binding device includes a film reel which provides a binding film to wrap the bale. The binding film may be a plastic film.

The binding device includes a film injection unit which draws the binding film from the film reel and injects the binding film into the compression chamber so that the bale is wrapped by the binding film as a result of a rotational movement of the bale. Thus, the binding device injects the binding film into the compression chamber. The binding device may be located on an upper part of the baler. In another example, the binding device is located at a middle part of the baler. In an example, the binding device is located outside the compression chamber and near the rotating rollers. In particular, when the film passes between the rollers and enters the compression chamber, it is positioned between the crop and the rollers and is entrained round the bale by the rotational movement of the roller and of the crop itself. There may be two rollers between the binding device and the rollers which rotate in opposite directions to draw the film therebetween from the film reel and transfer the film to the rollers.

The binding device may have two rotating cylinders, downstream of the reel, between which the film is entrained to be carried into the compression chamber.

The baler 1 comprises a width reducing device 4, placed downstream of the film injection unit. The width reducing device 4 includes a pair of rollers 401 movable between an approached position, where the rollers are in contact with edges of the binding film so that a width of the film is narrowed, and a spaced apart position, where the rollers are distanced from the edges of the binding film. The width reducing device includes a first arm 402A and a second arm 402B, each supporting a respective roller of the pair of rollers 401.

The width reducing device also includes a hydraulic actuator which includes a first hydraulic cylinder 4030A connected to the first arm 402A and a second hydraulic cylinder 4030B connected to the second arm 402B, the hydraulic actuator being configured to move the first and the second arm so as to move the pair of rollers between said approached and spaced apart positions.

Therefore, the rollers 401 are positioned on the right and left edges of the film.

The first and the second arms are actuated by the first and second hydraulic actuators and move towards and away from each other along a direction perpendicular to the longitudinal direction of the film. When the first and the second arms move towards each other, the rollers are positioned at the approached position and thus push the edges of the film so as to reduce the width of the film.

In particular, the arms 402A and 402B move along a bar which extends along a direction perpendicular to the longitudinal direction of the film; therefore, the arms translate linearly along the bar towards and away from each other following a direct linear path without deviating into a curved trajectory. Alternatively, the arms can have a movement with curvature in their trajectory. In an example the movement of the rollers towards and away from each other can be controlled in a way that a desired distanced between the rollers is obtained. Such a distance determines the width of the film.

The baler includes a tailgate. The tailgate is moved by a hydraulic tailgate actuator 7 between a closed position where the compression chamber is closed to form the bale, and an open position where the tailgate is open in order to release the bale formed inside the compression chamber.

The tailgate is made according to one or more aspects described in Italian patent application 102017000093544 in the name of the present Applicant and is fully incorporated herein by reference.

The baler 1 includes a hydraulic circuit 6. In a preferred example, the hydraulic circuit is hydraulically connected to the hydraulic tailgate actuator and to the first and second hydraulic cylinders 4030A, 4030B to provide them with actuating oil.

In this example, therefore, the hydraulic circuit provides the actuating oil to both the hydraulic tailgate actuator 7 and to the hydraulic actuator 403 of the width reducing device.

In this example, the hydraulic circuit 6 includes a first part 6' connected to the first and the second hydraulic cylinders 4030A, 4030B, and a second part 6" connected to the hydraulic tailgate actuator 7.

The hydraulic circuit 6 also includes a hydraulic duct which connects the first part and the second part. A unidirectional valve 64 is inserted in said hydraulic duct. Thus, the first and the second parts of the hydraulic circuit receive oil from one reservoir only.

In an example, in a closing configuration of the hydraulic circuit, the hydraulic circuit delivers oil to the tailgate actuator to move the tailgate from the open position to the closed position, and to the hydraulic actuator 403 of the width reducing device to move the pair of rollers from the approached position to the spaced apart position. Thus, when the tailgate is closed, the rollers are moved to the spaced apart position. These movements of the tailgate and of the rollers may be simultaneous or partly simultaneous.

The hydraulic circuit 6 also includes a dump line 63 for connecting the first and the second hydraulic cylinders to a dump reservoir provided in the tractor T. An electro-valve 65 may be inserted in the dump line and is movable between an active position, allowing the actuating oil to flow through the dump line towards the dump reservoir, and an inactive position, for preventing the actuating oil from reaching the dump reservoir. The baler includes a control unit connected to the electro-valve to switch it to the active position so as to allow the rollers to move to the approached position.

The hydraulic circuit also comprises a fluid accumulator 66 hydraulically connected to the first and the second hydraulic cylinders. The accumulator is full of gas which is separated from the actuating oil of the hydraulic circuit through a separating element. The separating element may be a rigid partition or a diaphragm.

The gas has a first pressure when the rollers of the pair of rollers are at the spaced apart position and a second pressure when they are at the approached position. The first pressure is greater than the second pressure. Thus, when the rollers move to the spaced apart position, the gas expands.

The movement of the pair of rollers from the spaced apart position to the approached position is due to said second pressure of the fluid accumulator.

The hydraulic circuit 6 is described in more detail below.

According to an aspect of it, this disclosure provides the hydraulic circuit 6. The hydraulic circuit 6 is configured to feed the hydraulic actuator 403 and/or the hydraulic tailgate actuator 7.

In particular, the hydraulic circuit 6 comprises and is configured to feed the first hydraulic cylinder 4030A and the second hydraulic cylinder 4030B. The first hydraulic cylinder 4030A and the second hydraulic cylinder 4030B are preferably two double-acting cylinders. The first hydraulic cylinder 4030A and the second hydraulic cylinder 4030B each comprise a respective first hydraulic chamber, which receives pressurized fluid to move the pair of rollers from the approached position to the spaced apart position, and a second hydraulic chamber, which receives pressurized fluid to move the pair of rollers from the spaced apart position to the approached position.

The hydraulic tailgate actuator 7 comprises a respective first hydraulic chamber, which receives pressurized fluid to move the tailgate to the closed position, and a second hydraulic chamber, which receives pressurized fluid to move the tailgate to the open position.

In a first embodiment of the hydraulic circuit 6, the hydraulic circuit comprises a first feed line 61. The first feed line 61 is hydraulically connected to the first hydraulic chamber of the first hydraulic cylinder 4030A, of the second hydraulic cylinder 4030B and of the hydraulic tailgate actuator 7. The first feed line 61 comprises a first branch 61A, connected to the first hydraulic chamber of the hydraulic tailgate actuator, and a second branch 61B, hydraulically connected to the first hydraulic chamber of the first hydraulic cylinder 4030A and of the second hydraulic cylinder 4030B, respectively. That way, the first feed line 61 conveys high pressure into said hydraulic chambers, causing the pair of rollers to move and/or the tailgate to move.

The hydraulic circuit 6, in an embodiment, comprises a second feed line 62. The second feed line 62 is hydraulically connected to the second hydraulic chamber of the hydraulic tailgate actuator 7. Therefore, when oil is pumped into the first hydraulic chamber of the hydraulic tailgate actuator through the first feed line 61, the oil is discharged from the second feed line 62, which thus acts as a dump line. On the contrary, when the movement must be inverted, the oil is pumped into the second hydraulic chamber of the hydraulic tailgate actuator through the second feed line 62, and the oil is discharged from the first feed line 61, which thus acts as a dump line.

The first feed line 61 is also hydraulically connected to the first hydraulic chamber of the first hydraulic cylinder 4030A and of the second hydraulic cylinder 4030B. That means that when the first feed line 61 is placed under high pressure, the high pressure causes the pair of rollers to move from the approached position to the spaced apart position and the tailgate to move from the open to the closed position.

The hydraulic circuit 6 comprises the dump line 63, configured to allow dumping the oil which is contained in the first hydraulic chamber of the first hydraulic cylinder 4030A and of the second hydraulic cylinder 4030B. The dump line 63 branches out from the second branch 61B of the first feed line 61.

The hydraulic circuit 6 comprises a first non-return valve 64. The first non-return valve 64 cuts out the second branch 61B of the first feed line 61. In particular, the first non-return valve 64 is configured in such a way as to prevent oil from flowing in a direction from the first and/or the second hydraulic cylinder 4030A, 4030B to the first branch 61A.

The hydraulic circuit 6 comprises the electro-valve (that is, a valve with a plurality of positions) 65. The electro-valve 65 is movable from an activated position, where the oil can flow through the dump line 63 to the dump system of the tractor, and an inactivated position PDS, where a second non-return valve 651 is positioned to cut out the dump line so that oil is prevented from reaching the dump system on the tractor.

Lastly, the hydraulic circuit 6 comprises a pressure accumulator 66. The pressure accumulator 66 is full of oil and gas (which may be separated from the oil by an isolating film). The pressure accumulator 66 is hydraulically connected to the second hydraulic chamber of the first hydraulic cylinder 4030A and of the second hydraulic cylinder 4030B. Having described the structural components of the hydraulic circuit, the operation of the system is now described with reference to these components to actuate the pair of rollers 401. Specifically, the oil is pumped through the first feed line 61, in particular through the second branch 61B. The electro-valve is at the inactivated position PDS, so the oil cannot flow towards the dump system on the tractor and, consequently, reaches the first hydraulic chamber of the first hydraulic cylinder 4030A and of the second hydraulic cylinder 4030B. The second hydraulic chamber of the first hydraulic cylinder 4030A and of the second hydraulic cylinder 4030B discharges into the accumulator 66 which, because of the reduced space available for the gas, increases in pressure. These hydraulic movements cause the pair of rollers 401 to move from the approached position to the spaced apart position. In the meanwhile, the oil pumped into the first branch 61A of the first feed line 61 causes the tailgate 5 to close.

Next, when the bale is ready to be wrapped and dumped from the baler, the control unit switches the electro-valve 65 to the activated position PAT. Therefore, since the first hydraulic chamber of the first hydraulic cylinder 4030A and of the second hydraulic cylinder 4030B come into hydraulic communication with the dump system, the pressure of the accumulator 66 causes fluid to be transferred from the accumulator 66 to the second hydraulic chamber of the first hydraulic cylinder 4030A and of the second hydraulic cylinder 4030B, thus moving the pair of roller 401 from the spaced apart position to the approached position. It is specified that, on account of the first non-return valve 64, the oil does not return towards the first feed line 61 (the first branch 61A).

In addition to the embodiment described above, a further solution for the hydraulic circuit 6, described purely by way of example below, is also imaginable.

In this further embodiment, the hydraulic circuit 6 is dedicated entirely to the pair of rollers 401 and there are no branches in common with the circuit for actuating the tailgate.

Specifically, the hydraulic circuit 6 comprises a high line 71, which is always under high pressure. Further, the hydraulic circuit 6 comprises a low line 72, which is always under low pressure because it is connected to the dump system. Further, the hydraulic circuit 6 comprises a first pair of branches 73, each hydraulically connected to the first hydraulic chamber of the first hydraulic cylinder 4030A and of the second hydraulic cylinder 4030B, respectively. The hydraulic circuit 6 comprises a second pair of branches 74, each hydraulically connected to the second hydraulic chamber of the first hydraulic cylinder 4030A and of the second hydraulic cylinder 4030B, respectively.

The hydraulic circuit 6 also comprises a selector valve 75. The selector valve is a four-way valve, hydraulically connected to the first pair of branches 73 (which lead into a single hydraulic line), to the second pair of branches 74 (which lead into a single hydraulic line), to the high line 71 and to the low line 72.

The selector valve includes one or more of the following configurations:
- idle position PF, where the high line 71 is in communication with the low line 72 so that no actuation action is performed;
- approached position, where the high line 71 is in communication with the second pair of branches 74 and the low line 72 is in communication with the first pair of branches 73, so as to cause the pair of rollers 401 to move from the spaced apart position to the approached position;
- spaced apart position, where the high line 71 is in communication with the first pair of branches 73 and the low line 72 is in communication with the second pair of branches 74, so as to cause the pair of rollers 401 to move from the approached position to the spaced apart position.

Further, the rollers of the pair of rollers 401 are of helical shape. One roller of the pair of rollers has the helical shape twisted in a first direction and the other roller of the pair of rollers has the helical shape twisted in a second direction. The second direction is the opposite of the first direction, so as to impart an upward movement to the film.

Therefore, when the rollers contact the binding film, at the approached position, they impart an upward movement to the film. The rollers of the pair of rollers have grooved profiles.

## Claims

1. A baler (1) for forming bales of crops, including:
- a compression chamber (2) for imparting a rotational movement to the crops to form the bale,
- a pick-up unit (3) configured for picking up crops from the ground and for feeding them into the compression chamber;
- a binding device including
a film reel providing a binding film for wrapping the bale,
a film injection unit configured for drawing the binding film from the film reel and for injecting the binding film into the compression chamber so that the bale is wrapped by the binding film as a result of a rotational movement of the bale,
- a width reducing device (4), placed downstream of the film injection unit, and including
a pair of rollers (401) movable between an approached position, where the rollers are in contact with edges of the binding film so that a width of the film is narrowed, and a spaced apart position, where the rollers are distanced from the edges of the binding film,
a first arm (402A) and a second arm (402B), each supporting a respective roller of the pair of rollers,
**characterized in that** the reducing device includes a hydraulic actuator (403) having a first hydraulic cylinder (4030A) connected to the first arm (402A) and a second hydraulic cylinder (4030B) connected to the second arm (402B), the hydraulic actuator being configured to move the first and the second arm so as to move the pair of rollers between said approached and spaced apart positions.

2. The baler (1) according to claim 1, including:
- a tailgate movable between a closed position where the compression chamber is closed to form the bale, and an open position where the tailgate is open in order to release the bale formed inside the compression chamber (2) and
- a hydraulic tailgate actuator (7) to move the tailgate between said open and closed positions,
- a hydraulic circuit (6) hydraulically connected to the hydraulic tailgate actuator and to the first and second hydraulic cylinders (4030A, 4030B) to provide them with actuating oil.

3. The baler (1) according to claim 2, wherein the hydraulic circuit (6) includes a closing configuration wherein the hydraulic circuit is configured to perform a closing movement, to move the tailgate from the open position to the closed position, and a spacing movement, to move the pair of rollers from the approached position to the spaced apart position.

4. The baler (1) according to claim 3 wherein the hydraulic circuit is configured to perform the closing movement and the spacing movement in time intervals that are at least in part overlapping.

5. The baler (1) according to claim 3 or 4, wherein the hydraulic circuit includes:
- a dump line (63) for connecting the first and the second hydraulic cylinders to a dump reservoir provided in a tractor (T) that tows the baler;
- an electro-valve (65), inserted in the dump line and movable between an active position, allowing the actuating oil to flow through the dump line towards the dump reservoir, and an inactive position, for preventing the actuating oil from reaching the dump reservoir,
- a control unit connected to the electro-valve for switching it to the active position to allow the rollers to move to the approached position.

6. The baler (1) according to claim 5, wherein the hydraulic circuit further includes a fluid accumulator (66), hydraulically connected to the first and the second hydraulic cylinders, the accumulator being filled with gas, separated from the actuating oil of the hydraulic circuit through a separating element.

7. The baler (1) according to any of the previous claims from 2 to 6, wherein the hydraulic circuit (6) has:
- a first part (6') connected to the first and the second hydraulic cylinders (4030A, 4030B);
- a second part (6") connected to the hydraulic tailgate actuator (7);
- a hydraulic duct, wherein the first part and the second part are connected through the hydraulic duct;
- a unidirectional valve (64) inserted in said hydraulic duct.

8. The baler (1) according to any of the previous claims, wherein the rollers of the pair of rollers are of helical shape, wherein one roller of the pair of rollers has the helical shape twisted in a first direction and the other roller of the pair of rollers has the helical shape twisted in a second direction, the second direction being the opposite of the first direction, so as to impart an upward movement to the film.

9. A method for forming bales of crops, comprising the following steps:
- picking up crops from the ground through a pick-up unit (3) of a baler (1) and feeding them into a compression chamber (2) of the baler;
- imparting a rotational movement to the crops inside the compression chamber to form the bale,
- drawing a binding film from a film reel and injecting the binding film into the compression chamber so that the bale is wrapped by the binding film as a result of a rotational movement of the bale,
- moving a pair of rollers (401) between an approached position, where the rollers are in contact with edges of the binding film so that a width of the film is narrowed, and a spaced apart position where the rollers are distanced from the edges of the binding film, wherein the rollers are supported by a first arm (402A) and a second arm (402B),
**characterized in that** the method includes a step of through a first hydraulic cylinder (4030A) and a second hydraulic cylinder (4030B), moving the first and the second arm, respectively, so as to move the pair of rollers between said approached and spaced apart positions.

10. The method according to claim 9, comprising the following steps:
- through a hydraulic tailgate actuator (7), moving a tailgate of the baler between a closed position where the compression chamber is closed to form the bale, and an open position where the tailgate is open in order to release the bale formed inside the compression chamber;
- providing both the hydraulic tailgate actuator and the first and the second hydraulic cylinders (4030A, 4030B) with actuating oil through a hydraulic circuit (6).

11. The method according to claim 10, wherein the pair of rollers is moved to said spaced apart position responsive to a closure of the tailgate.

12. The method according to claim 10 or 11, comprising the following steps:
- moving an electro-valve (65), inserted in a dump line (63) which connects the first and the second hydraulic cylinders to a dump reservoir provided in a tractor (T) that tows the baler, between an active position, to allow the actuating oil to flow through the dump line towards the dump reservoir, and an inactive position, for preventing the actuating oil from reaching the dump reservoir,
- moving the electro-valve to the active position to move the rollers to the approached position.

13. The method according to claim 12 wherein a fluid accumulator (66) is hydraulically connected to the first and the second hydraulic cylinders, the accumulator being filled with gas, separated from the actuating oil of the hydraulic circuit through a separating element.

14. The method according to any of the previous claims from 10 to 13, wherein the hydraulic circuit has:
- a first part (6') connected to the first and the second hydraulic cylinders;
- a second part (6") connected to the hydraulic tailgate actuator;
- a hydraulic duct, wherein the first part and the second part are connected through the hydraulic duct;
- a unidirectional valve (64) inserted in said hydraulic duct.

15. The method according to any of the previous claims from 10 to 14, wherein when the rollers contact the binding film, in the approached position, they impart an upward movement to the film.
